## Europäisches Patentamt

## European Patent Office

## Office européen des brevets

(11) Veröffentlichungsnummer: **0 245 736 B1**

(12) **EUROPÄISCHE PATENTSCHRIFT**

(45) Veröffentlichungstag der Patentschrift:
23.08.89

(51) Int. Cl.⁴: **F01N 3/28**, B01J 35/04

(21) Anmeldenummer: 87106404.4

(22) Anmeldetag: 04.05.87

(54) Metallischer Katalysator-Trägerkörper mit evolventenförmig verlaufenden Schichten.

(30) Priorität: 12.05.86 DE 3615913

(43) Veröffentlichungstag der Anmeldung:
19.11.87 Patentblatt 87/47

(45) Bekanntmachung des Hinweises auf die Patenterteilung:
23.08.89 Patentblatt 89/34

(84) Benannte Vertragsstaaten:
AT BE CH DE ES FR GB GR IT LI LU NL SE

(56) Entgegenhaltungen:
DE-A- 3 312 944
FR-A- 2 183 063
FR-A- 2 187 011
US-A- 3 849 076

(73) Patentinhaber: INTERATOM Gesellschaft mit
beschränkter Haftung, Friedrich-Ebert-Strasse,
D-5060 Bergisch-Gladbach 1(DE)

(72) Erfinder: Cyron, Theodor, Dipl.-Ing.,
Kurt-Schumacher-Strasse 12, D-5060 Bergisch
Gladbach 1(DE)

(74) Vertreter: Mehl, Ernst, Dipl.-Ing. et al, Postfach 22 13 17,
D-8000 München 22(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen metallischen Katalysator-Trägerkörper nach dem Oberbegriff des Anspruchs 1.

Solche Katalysator-Trägerkörper sind beispielsweise aus der DE-A 3 312 944 und der EP-A 0 121 174 bekannt. Aus diesen Schriften ist weiterhin bekannt, daß es bei mit einem Mantelrohr versehenen Katalysator-Trägerkörpern zu erheblichen Spannungen zwischen den einzelnen Lagen kommen kann. Für den bekannten spiralförmigen Aufbau solcher Katalysator-Trägerkörper wurden verschiedene Lösungen dieses Problems vorgeschlagen.

Aufgabe der vorliegenden Erfindung ist es, durch einen grundsätzlich anderen Aufbau der Lagen Spannungen zwischen den Blechen und dem Mantelrohr und den Blechen untereinander besser zu beherrschen.

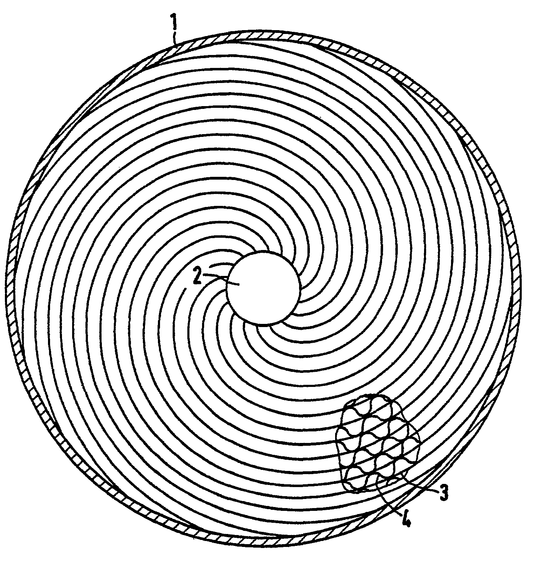

Zur Lösung dieser Aufgabe wird gemäss dem Hauptanspruch vorgeschlagen, daß die einzelnen Lagen etwa evolventenförmig von einem Zentrum nach außen verlaufen und mit ihren äußeren Enden an einem Mantelrohr befestigt sein sollen. Vorteilhafte Ausgestaltungen sind in den Ansprüchen angegeben und werden anhand der Zeichnung näher erläutert.

Ein Ausführungsbeispiel der Erfindung ist schematisch in einer Ansicht von der Stirnseite des Katalysator-Trägerkörpers in der Zeichnung dargestellt. Von einem Zentrum 2, beispielsweise bestehend aus einem zylinderförmigen Einsatz oder dergleichen, gehen, evolventenförmig abwechselnd geschichtet, glatte und strukturierte Bleche 3, 4 aus. Durch diese spezielle Form der Blechlage wird der gesamte Querschnitt des Katalysator-Trägerkörpers gleichmässig mit Blechen ausgefüllt. Aufgrund ihrer Definition haben die Evolventen überall gleichen Abstand, wodurch diese Bauform überhaupt erst möglich wird. Die Enden der einzelnen Bleche 3, 4 sind mit einem Mantelrohr 1 fügetechnisch verbunden, vorzugsweise angelötet. Dadurch, daß die Blechlagen nur am Mantelrohr befestigt, nicht jedoch untereinander systematisch fügetechnisch verbunden sind, entsteht ein sehr elastisches Gebilde, welches die durch thermische Wechselbelastungen entstehenden Spannungen aufnehmen kann. Ein derart aufgebauter Katalysator-Trägerkörper eignet sich insbesondere für einen motornahen Einbau.

## Patentansprüche

1. Aus abwechselnden Lagen glatter (3) und gewellter (4) Bleche bestehender metallischer Katalysator-Trägerkörper, dadurch gekennzeichnet, daß die einzelnen Lagen (3, 4) etwa evolventenförmig von einem Zentrum (2) nach außen verlaufen und mit ihren äußeren Enden an einem Mantelrohr (1) befestigt, vorzugsweise verlötet sind.

2. Katalysator-Trägerkörper nach Anspruch 1, dadurch gekennzeichnet daß die einzelnen Lagen (3, 4) in Abweichung von der idealen Evolventenform tangential vom Zentrum (2) ausgehen.

3. Katalysator-Trägerkörper nach Anspruch 1 oder 2, dadurch gekennzeichnet daß das Zentrum (2) gasdicht verschlossen ist.

## Claims

1. Catalyst-carrier body consisting of alternating layers of smooth (3) and corrugated (4) sheets, characterised in that the individual layers (3, 4) extend outwards approximately in the form of an involute from a core (2) and with their outer ends are secured in a tubular shell (1) by a joining technique, preferably brazed.

2. Catalyst-carrier body according to claim 1, characterised in that the individual layers (3, 4) emanate tangentially from the core (2) deviating from the ideal involute form.

3. Catalyst-carrier body according to claim 1 or 2 characterised in that the core (2) is sealed in a gastight manner.

## Revendications

1. Support métallique de catalyseur constitué de couches alternées de tôles lisses (3) et ondulées (4), caractérisé en ce que les couches (3, 4) individuelles s'étendent sensiblement sous forme de développantes, d'un centre (2) vers l'extérieur et sont fixées par une technique de jointoiement en étant de préférence soudées, par leur extrémité extérieure à un tube formant enveloppe (1).

2. Support de catalyseur suivant la revendication 1, caractérisé en ce que les couches (3, 4) individuelles partent en s'écartant de la forme idéale de développante, tangentiellement du centre (2).

3. Support de catalyseur suivant la revendication 1 ou 2, caractérisé en ce que le centre (2) est fermé d'une manière étanche au gaz.